# EUROPÄISCHE PATENTSCHRIFT

(11) **EP 3 374 192 B1**
(45) Veröffentlichungstag und Bekanntmachung des Hinweises auf die Patenterteilung: **18.01.2023**
(21) Anmeldenummer: 16794939.5
(22) Anmeldetag: 09.11.2016
(51) Int. Cl.: B41M 3/14, C09K 11/06, C09D 161/28, D21H 21/30, G07D 7/12, B42D 25/30, B42D 25/29, C09B 67/22, C09B 67/08, C09B 67/02, C09D 11/037, G01N 21/64, B42D 25/387

(54) **SICHERHEITSPIGMENT BASIEREND AUF KERN-HÜLLE-TEILCHEN UND DEREN HERSTELLUNGSVERFAHREN**
SECURITY PIGMENT BASED ON CORE-SHELL PARTICLES, AND PRODUCTION METHOD
PIGMENT DE SÉCURITÉ À BASE DE PARTICULES COEUR-ÉCORCE ET SON PROCÉDÉ DE PRODUCTION

(30) Priorität: 11.11.2015 DE 102015014539
(43) Veröffentlichungstag der Anmeldung: 19.09.2018
(73) Patentinhaber: Giesecke+Devrient Currency Technology GmbH, 81677 München (DE)
(72) Erfinder: KECHT, Johann, 81677 München (DE); SCHLOSSBAUER, Axel, 80799 München (DE)
(74) Vertreter: Giesecke + Devrient IP
(86) Internationale Anmeldenummer: PCT/EP2016/001861
(87) Internationale Veröffentlichungsnummer: WO 2017/080652

(56) Entgegenhaltungen:
- WO-A1-2008/141972
- WO-A1-2017/080653
- DE-A1- 19 546 757
- DE-A1-102004 063 217
- DE-A1-102012 013 244
- JP-A- H06 148 925
- US-A- 5 082 757

## Beschreibung

Die Erfindung betrifft ein Sicherheitspigment auf Basis von Kern-Hülle-Teilchen, insbesondere ein lumineszierendes Kern-Hülle-Teilchen und Verfahren zum Herstellen desselben.

Die Erfindung betrifft insbesondere Sicherheitsmerkmale auf Basis spezieller Kern-Hülle-Teilchen, welche verschiedene Merkmalsstoffe (insbesondere organische Lumineszenzfarbstoffe, Infrarot-Absorber, thermochrome Farbstoffe und photochrome Farbstoffe) enthalten können. Hierdurch wird die Stabilität der Merkmalsstoffe gegenüber äußeren Einflüssen (z.B. organische Lösungsmittel, Einwirkung von Säuren und Basen) massiv erhöht und damit ihre Anwendbarkeit insbesondere im Banknotenbereich ermöglicht bzw. verbessert.

Das Einbetten von Lumineszenzstoffen in Polymere ist allgemein bekannt. Beispielsweise beschreibt die EP 1661107 B1 ein mit lumineszierenden Seltenerdstoffen komplexiertes PMMA. Durch eine solche einfache Einbettung wird jedoch kein vollständiger Schutz und keine besondere Stabilität gegenüber chemischen Angriffen erreicht.

Die DE 195 46 757 A1 beschreibt einen verkapselten Toner zur Wärme- und Druck-Fixierung, umfassend ein wärmeschmelzbares Kernmaterial, das mindestens ein thermoplastisches Harz und ein Farbmittel und eine darum gebildete Hülle umfasst, sodass die Oberfläche des wärmeschmelzbaren Kernmaterials bedeckt wird, wobei ein Hauptbestandteil der Hülle ein Hybridharz mit einer Molekülstruktur ist, das eine durch Kondensationspolymerisation erhältliche Molekülkette und eine durch Additionspolymerisation erhältliche Molekülkette umfasst, wobei die zwei Molekülkettenarten chemisch gebunden sind.

Die JP H06 148925 A beschreibt einen verkapselten Toner, wobei die Hülle aus einem amorphen Polyester besteht. Der Toner besteht aus einem thermoplastischen Kernmaterial, das mindestens ein thermoplastisches Harz und Farbmittel aufweist, und einer Hülle, die die Oberfläche des Kenmaterials bedeckt.

Die WO 2008/141972 A1 beschreibt Kern-Hülle-Teilchen, die ein Breitspektrum-Absorberkontrastmittel und/oder Vorläufer eines Breitspektrum-Absorberkontrastmittels umfasst, sowie die Verwendung der Partikel und die Herstellung der Partikel.

Die US 5082757 A beschreibt eine Zusammensetzung eines verkapselten Toners, der einen Kern mit einem polymeren Bindemittel, ein Pigment, einen Farbstoff oder Mischungen derselben umfasst, und eine Mikrokapselhülle aus einem hydroxylierten Polyurethans, die aus der Polykondensation eines Polyisocyanats und einem wasserlöslichen Kohlenhydrat abgeleitet ist.

Die DE 102004063217 A1 beschreibt ein Sicherheitsmerkmal für Sicherheitspapiere, Wertdokumente und dergleichen, mit einem säurelabilen Merkmalsstoff als Kern und einer im Wesentlichen aus Metalloxid bestehenden Hülle, wobei das Sicherheitsmerkmal eine gegenüber dem säurelabilen Merkmalsstoff erhöhte Stabilität gegen die Einwirkung von Säuren aufweist.

Die DE 102012013244 A1 beschreibt ein Wertdokument mit lumineszierenden, partikulären Agglomeraten, die jeweils mindestens zwei unterschiedliche, mit einer ersten bzw. einer zweiten Emissionswellenlänge emittierende, lumineszierende, feste homogene Phasen beinhalten, wobei bei einer Auswertung von Messwerten, die durch eine an verschiedenen Orten durchgeführte, ortspezifische Messung der ersten Lumineszenzintensität bei der ersten Emissionswellenlänge und der zweiten Lumineszenzintensität bei der zweiten Emissionswellenlänge erhältlich sind, eine statistische Korrelation zwischen den ersten Lumineszenzintensitäten und den zweiten Lumineszenzintensitäten vorliegt.

Die WO 2017/080653 A1 ist Stand der Technik nach Artikel 54 (3) EPÜ und beschreibt Verfahren zum Herstellen eines Sicherheitspigments aus Kern-Hülle-Teilchen, umfassend einen auf einem thermoplastischen Polymer basierenden festen Kern, eine auf einem Kondensationspolymer basierende Hülle und einen im Kern in gelöster oder fein verteilter Form vorliegenden organischen oder metallorganischen Merkmalsstoff, aufweisend a) den Schritt des Lösens des Merkmalsstoffs zusammen mit dem thermoplastischen Polymer in einem organischen Lösungsmittel und das Dispergieren der erhaltenen Lösung in Wasser oder einer wässrigen Lösung mittels eines Tensids; b) das Bereitstellen der in einer Kondensationsreaktion zu polymerisierenden Präpolymer-Einheiten bei einem bestimmten pH-Wert, um die Kondensation des die Hülle bildenden Polymers um die dispergierten Tröpfchen des organischen Lösungsmittels zu erzielen; c) das Entfernen des organischen Lösungsmittels, um die Kern-Hülle-Teilchen mit festem Kern zu bilden.

Der vorliegenden Erfindung liegt die Aufgabe zugrunde, ein gegenüber dem Stand der Technik verbesserten Merkmalsstoff bereitzustellen. Des Weiteren liegt der vorliegenden Erfindung die Aufgabe zugrunde, eine gegenüber dem Stand der Technik verbesserte Methode zur Herstellung eines Merkmalsstoffes bereitzustellen.

Diese Aufgaben werden durch die in den unabhängigen Ansprüchen definierten Merkmalskombinationen gelöst. Weiterbildungen der Erfindung sind Gegenstand der Unteransprüche.

### Ausführliche Beschreibung der Erfindung

Gemäß der vorliegenden Erfindung werden die Merkmalsstoffe in einen thermoplastischen Polymer-Kern, z.B. aus Polymethylmethacrylat (PMMA), eingebettet und mit einer Hülle aus einem quervernetzten polaren Kondensationspolymer, das aus Melamin-Formaldehyd-Harz (MF) gewählt ist, umhüllt. Die Hülle aus MF schützt den Merkmalsstoff infolge ihrer Beschaffenheit als quervernetztes unlösliches Polymer insbesondere vor organischen Lösemitteln. Der Kern aus PMMA schützt den Merkmalsstoff vor wässrigen oder stark polaren Lösemitteln, die durch das MF diffundieren könnten. Weiterhin nimmt PMMA die meisten Merkmalsstoffe sehr gut auf und ermöglicht so deren homogene Verteilung im Kernmaterial. Neben PMMA können auch andere Polymerarten mit ähnlichen Eigenschaften verwendet werden, um erfindungsgemäße Kern-Hülle-Teilchen zu erzeugen.

Erfindungsgemäß wird ein maßgeschneiderter, mehrstufiger Schutz gegenüber einem breiten Spektrum chemischer Angriffe erzielt.

Zahlreiche Druckschriften beschreiben die Verwendung von MF als Hüllmaterial, meistens zur Verkapselung von Flüssigkeiten. Typische Anwendungsbereiche sind dabei oft die Erzeugung druckempfindlicher Mikrokapseln (z.B. zur Freisetzung von Duftstoffen beim Reiben einer Oberfläche) oder langsam durchlässiger Mikrokapseln (z.B. zur kontrollierten Freisetzung von Arzneimitteln und Pestiziden), siehe z.B. EP 0978312 B2, EP 1438126 B1, EP 0026914 B1.

Demgegenüber liegt der vorliegenden Erfindung die Erzeugung hochstabiler Verkapselungen mit festem Polymerkern zugrunde.

Die Verkapselung von Fluoreszenzstoffen mit Hüllmaterialien ist allgemein bekannt. Beispielsweise beschreibt die EP 1208382 B1 (siehe darin das Beispiel 6) die Umhüllung von Fluoreszenzpartikeln mit MF. Diese erreichen jedoch nicht die für Banknoten erforderliche Stabilität gegenüber chemischen Angriffen, da die erreichten Hüllenstärken viel zu gering sind und kein komplementärer Schutz gegen polare und unpolare Angriffe vorliegt. Obwohl die Lehre der EP 1208382 B1 einen gewissen Schutz gegenüber Lösungsmittelangriffen (die das Herauswaschen von Farbstoffen zur Folge haben) bereitstellt, würde insbesondere die bekannte Instabilität von MF-Hüllen gegenüber starke Säuren und Basen deutlich höhere Wandstärken erfordern, um einen ausreichenden Schutz vor derartigen chemischen Angriffen zu bieten. Die in der EP 1208382 B1 erwähnten Kernmaterialien sind breit gefächert und bieten keinen spezifischen Schutz vor Säure- oder Basenangriffen.

Weiterhin behandeln die Schriften DE 102006008245 A1 und DE 102006008247 A1 die Erzeugung von Sicherheitsmerkmalen auf Basis von Kern-Hülle-Teilchen. Darin ist der Lumineszenzstoff nicht homogen in einem Polymerkern gelöst, sondern er liegt entweder direkt als Reinstoff oder als separat verkapselter Reinstoff vor. Daraus ergeben sich mehrere Nachteile, wie z.B. Konzentrations-Quenching, unzureichender Schutz vor Chemikalien, sowie eine eingeschränkte Auswahl an geeigneten Lumineszenzfarbstoffen.

Das Patent EP 0226367 B1 beschreibt die Agglomeration von fluoreszierenden Kondensationspolymerpartikeln mit verschiedenen Polymeren zu großen Agglomeratpartikeln. Diese Partikel bieten keinen komplementären Schutz gegen organische Lösungsmittel bzw. Säuren und Laugen. Außerdem wird dort kein Thermoplast-Kern eingesetzt, was technische Nachteile bei der Einbringung und feinen Verteilung der Farbstoffe zur Folge hat.

Zur Erzeugung der erfindungsgemäßen Kern-Hülle-Teilchen wird bevorzugt ein Verfahren genutzt, welches eine spezielle Weiterentwicklung eines sogenannten "Solvent-Evaporation"-Prozesses ist. Dieser wird in der Pharmazie und anderen Gebieten der Mikroverkapselungstechnik oft dazu verwendet, um hydrophobe Stoffe (z.B. Medikamente) in einem Polymer einzubetten bzw. mit einem Polymer zu umhüllen (siehe z.B. Tice et. al, "Preparation of injectable controlled-release microcapsules by a solventevaporation process" Journal of Controlled Release, 2 (1985) 343-352). Dabei wird der Stoff zusammen mit einem Matrixmaterial (z.B. einem Polymer) in einem organischen Lösemittel gelöst und in Wasser dispergiert. Durch Verdampfen des Lösungsmittels fallen das Matrixmaterial und der darin enthaltene Stoff in Form kleiner sphärischer Partikel bzw. Mikrokapseln aus. Dabei entsteht jedoch kein polymerverkapseltes Polymer.

Viele der Mikroverkapselungen aus dem Stand der Technik befassen sich mit der direkten Verkapselung von (Merkmals-)Stoffen mit einer Hülle (d.h. das Kernmaterial wird durch den Merkmalsstoff gebildet). Alternativ werden diskrete Merkmalsstoffpartikel in eine Matrix eingebettet, welche als Kern fungiert.

Im Gegensatz dazu wird gemäß der vorliegenden Erfindung der Merkmalsstoff bevorzugt im Kernmaterial gelöst und liegt dort auf molekularer Ebene homogen verteilt vor. Die Vorteile sind u.a. ein verringertes Konzentrations-Quenching bei Lumineszenz, ein stärkeres Absorptionsverhalten und eine stärkere Farbwirkung.

Weiterhin liegen bei den im Stand der Technik beschriebenen polymerbasierten Kern-Hülle-Teilchen die Stabilitäten gegenüber mehreren unterschiedlichen Lösungsmitteln etc. nicht im Fokus. Es findet daher im Stand der Technik keine gezielte Auswahl geeigneter Polymerkombinationen statt, diese sind, wenn überhaupt, nur durch Auswahl aus längeren Aufzählungen von Polymeren zu finden.

Für die erfindungsgemäßen Mikrokapseln können angesichts der gewünschten Eigenschaften einige bevorzugte Kombinationen genannt werden:
Die aus dem Stand der Technik theoretisch ableitbaren Mikrokapseln würden auch mit PMMA-Kern und MF-Hülle im Vergleich zu den erfindungsgemäßen Partikeln keine ausreichende Stabilität für den Einsatz im Banknotenbereich aufweisen, da die Hülle nicht dick genug wäre. Beispielsweise beschreibt die EP 1208382 B1 im Absatz [0014] einen bevorzugten Hüllanteil von 1 bis 20 Gew.-% des Kernmaterials. Für die erfindungsgemäßen stabilen Kern-Hülle-Teilchen beträgt der Hüllanteil jedoch typischerweise über 100 Gew.-% des Kernmaterials, da ansonsten ein Herauslösen z.B. von Fluoreszenzfarbstoffen durch geeignete aggressive Lösemittel wie Aceton stattfinden kann.

Für viele Applikationen außerhalb des Banknotensicherheitsbereichs sind dünnere Hüllen vorteilhaft, da dort keine oder nur eine geringe Schutzwirkung der Hülle ausreicht. Durch die dünnere Hülle sinken die Rohstoffkosten und es steht anteilsmäßig mehr funktionales Kernmaterial zur Verfügung. Dementsprechend sind viele der bisher verwendeten Mikroverkapselungsprozesse selbst-limitierend, d.h. die Hülle wird durch Reaktion von zwei oder mehr Komponenten gebildet, eine steigende Hüllendicke bremst jedoch die Reaktion und verhindert ein weiteres Wachstum (z.B. bei Grenzflächenkondensation von Reaktanden in zwei unterschiedlichen Phasen).

Weiterhin führt bei vielen anderen Verkapselungsreaktionen wie z.B. der in der EP 1208382 B1 beschriebenen Vorgehensweise der Versuch, die Hüllendicke durch Konzentrationserhöhung der hüllenbildenden Chemikalien zu erhöhen, zu unerwünschter Nukleation und zur Erzeugung von unerwünschten zusätzlichen Partikeln in der Lösung.

Die hohen Hüllenstärken von 100 Gew.-% oder mehr, bezogen auf das Kernmaterials, welche für eine hohe Stabilität von Banknotensicherheitsmerkmalen erforderlich sind, werden daher im Stand der Technik nicht eingesetzt.

Die vorliegende Erfindung gewährleistet, unabhängig von der spezifischen Herstellungsmethode der Verkapselung, einen maßgeschneiderten, mehrstufigen Schutz gegenüber einem breiten Spektrum chemischer Angriffe und beinhaltet die Erzeugung chemisch stabiler Sicherheitsmerkmale aus einem beladenen Thermoplast-Kern und einer ausreichend dicken Duromer-Hülle.

Gemäß einer bevorzugten Ausführungsform bestehen die Kern-Hülle-Teilchen aus einem einzelnen Kern, der von einer Hülle umgeben ist.

Gemäß einer bevorzugten Ausführungsform werden die erfindungsgemäßen Kern-Hülle-Teilchen durch einen Solvent-Evaporation-Prozess mit gleichzeitiger Bildung einer Duromerhülle gewonnen (Fall A).

Gemäß einer weiteren bevorzugten Ausführungsform werden funktionalisierte Kerne mit einer Hülle eines Kondensationspolymers umgeben, dessen Monomere an die funktionellen Gruppen anbinden (Fall B).

Gemäß einer weiteren bevorzugten Ausführungsform bestehen die Kern-Hülle-Teilchen aus mehreren Kernen, die zusammen in ein Hüllmaterial eingebettet sind.

Gemäß einer weiteren bevorzugten Ausführungsform werden die Kern-Hülle-Teilchen durch einen Extrusionsprozess gewonnen (Fall C).

### A) Beschreibung des Herstellungsverfahrens auf Basis eines Solvent-Evaporation-Prozesses mit gleichzeitiger Bildung einer Duromerhülle:

In einem ersten Schritt werden die Merkmalsstoffe zusammen mit dem Kernmaterial in einem geeigneten organischen Lösungsmittel gelöst (z.B. in Dichlormethan). Die Lösung wird mit Hilfe eines Tensids bzw. eines Emulgators (z.B. Natrium-Dodecylsulfat) in Wasser dispergiert. Durch Zugabe eines Melamin-Formaldehyd-Präpolymers und Einstellen des korrekten pH-Wertes erreicht man eine Kondensation des MF, um die dispergierten Tröpfchen des organischen Lösemittels herum. Wird nun das organische Lösemittel entfernt, z.B. durch Erhöhung der Temperatur knapp unter die Siedetemperatur der organischen Lösungsmittels, fallen die gelösten Stoffe wieder aus, bleiben jedoch vom MF umhüllt. In einem zweiten Schritt wird die MF-Hülle anschließend gestärkt (insbesondere durch Zugabe von mehr MF-Präpolymer, ggf. bei erhöhter Temperatur). Für die Umhüllung ist das Vorhandensein von dispergierten Tröpfchen der flüssigen organischen Phase notwendig. Wird das organische Lösemittel zuerst entfernt und dann MF-Präpolymer zugegeben, so findet keine abdichtende Umhüllung mit MF statt.

### B) Beschreibung des Herstellungsverfahrens auf Basis einer Anbindung an funktionelle Gruppen:

In einem ersten Schritt werden Polymerpartikel erzeugt, welche auf ihrer Außenoberfläche geeignete funktionelle Gruppen tragen, damit das in einem zweiten Schritt zugegebene Kondensationspolymer (bzw. dessen Monomere) daran anbinden kann. Beispielsweise können mit Aminogruppen funktionalisierte PMMA-Mikrosphären (z.B. hergestellt durch Aminolyse von PMMA mit Diaminoalkanen) unter Einsatz von Scherkräften in einer angesäuerten wässrigen Lösung (pH∼5) mit einem Melamin-Formaldehyd-Präpolymer umgesetzt werden, um die PMMA-Partikel mit einer MF-Hülle zu versehen. Die Funktionalisierung der PMMA-Partikel sorgt dabei für ein direktes Anwachsen der MF-Hülle um die PMMA-Partikel.

### C) Beschreibung des Herstellungsverfahrens auf Basis eines Extrusionsprozesses:

In einem ersten Schritt werden mit Merkmalsstoff beladene Thermoplast-Partikel erzeugt, beispielsweise durch Auflösen des Thermoplasten und des Merkmalsstoffes in einem organischen Lösemittel, Dispergierung des Lösemittels in einer wässrigen Tensid-Lösung, und Entfernen des organischen Lösemittels durch Verdampfen.

In einem zweiten Schritt werden Verbund-Polymerpartikel erzeugt, indem die Thermoplast-Partikel in ein Polymer oder den Vorläufer eines Polymers durch einen Extruder, z.B. einen Doppelschneckenextruder, eingebracht werden, z.B. im Rahmen einer thermisch gesteuerten Reaktionsextrusion. Dieses Polymer wird im weiteren als "Kitt-Polymer" bezeichnet, da es wie ein Kitt die Thermoplast-Partikel miteinander verbindet. Das extrudierte Kitt-Polymer (welches die Thermoplast-Partikel enthält) wird dann auf eine geeignete Korngröße gebracht, z.B. durch Vermahlen. Die Kitt-Polymerpartikel werden in einer wässrigen angesäuerten Lösung unter Einsatz von Scherkräften mit einem MF-Präpolymer umgesetzt, um sie mit einer MF-Hülle zu versehen.

Vorzugsweise wird als Kitt-Polymer ein Polymer verwendet, welches an der Oberfläche freie reaktive Gruppen, z.B. Hydroxyl- oder Aminogruppen, aufweist, um ein direktes Anwachsen der MF-Hülle an die Partikel zu ermöglichen. Insbesondere bevorzugt handelt es sich beim Kitt-Polymer um stark vernetztes Polyurethan oder Polyharnstoff. Das Kitt-Polymer fungiert hier als eine Art Vermittler, um ein Anwachsen der MF-Hülle an das normalerweise nicht an MF bindende thermoplastische Polymer zu ermöglichen.

Ebenso sind weitere Herstellungsverfahren bzw. Abwandlungen der hier vorgestellten Herstellungsmethoden denkbar, um die erfindungsgemäßen Partikel herzustellen.

Die Größe der resultierenden Kern-Hülle-Teilchen ist dabei in einem Bereich von 0,1 µm bis 100 µm, bevorzugt 0,5 µm bis 20 µm, weiter bevorzugt 0,8 µm bis 5 µm, insbesondere bevorzugt 1 µm bis 3µm.

Der Masseanteil der Hülle beträgt stets mehr als 25% der Masse des thermoplastischen Kernmaterials, bevorzugt mehr als 50% der Masse des thermoplastischen Kernmaterials, insbesondere bevorzugt mehr als 100% der Masse des thermoplastischen Kernmaterials.

Der Anteil des Merkmalstoffes am Kernmaterial beträgt bevorzugt zwischen 0,01 bis 50 Gewichtsprozent, besonders bevorzugt zwischen 0,1 bis 30 Gewichtsprozent, ganz besonders bevorzugt zwischen 1 und 15 Gewichtsprozent.

Bevorzugt weisen die erfindungsgemäßen Kern-Hülle-Teilchen einen Gewichtsanteil von Fremdpartikeln wie z.B. im Fall einer lösungsbasierten Synthese durch Fremdnukleation ggf. entstehende Hüllenpartikel ohne Kern von weniger als 15%, besonders bevorzugt von weniger als 1,5% auf.

Das Polymer des Kernmaterials besteht aus Thermoplasten, bevorzugt aus einem thermoplastischen, unvernetzten Polymer. Gemäß einer bevorzugten Ausführungsform besteht das Polymer des Kernmaterials aus polymerisierten Ethylenderivaten, weiter bevorzugt aus Polystyrol (PS) oder Polyacrylaten, darunter bevorzugt Polymethylmethacrylat (PMMA), Polyvinylacetat (PVAC), Polyvinylchlorid (PVC), Polyacrylnitril (PAN) oder aus einem zwei oder mehrere dieser Polymere enthaltenden Copolymer wie z.B. Acrylnitril-Butadien-Styrol-Copolymer (ABS). Gemäß einer weiteren bevorzugten Ausführungsform handelt es sich bei den Ethylenderivaten um Polyethylen (PE), Polypropylen (PP) oder andere aus aliphatischen Kohlenstoffketten aufgebaute Polymere.

Gemäß einer weiteren bevorzugten Ausführungsform besteht das Polymer des Kernmaterials aus Polycarbonaten (PC), Polyamiden (PA), Polyurethanen (PU), Polyharnstoffen (PH) oder Polyestern wie Polyethylenterephthalat (PET).

Die Kettenlängen der Polymere des Kernmaterials liegen dabei bevorzugt in einem Bereich von 1000 bis 1 000 000 g/mol, besonders bevorzugt in einem Bereich von 50 000 bis 250 000 g/mol.

Bei dem Polymer des Hüllmaterials handelt es sich bevorzugt um stark (d.h. dreidimensional) vernetzte Duroplaste, nämlich Kondensationspolymere, bei denen ein Monomer drei oder mehr, bevorzugt sechs potenzielle Bindungsstellen besitzt. Das Polymer des Hüllmaterials besteht aus durch Kondensationsreaktionen polymerisierten Einheiten, wobei es sich um Melamin-Formaldehyd-Harze (MF) handelt.

Die erfindungsgemäßen Partikel schützen den darin enthaltenen Merkmalsstoff gegen schädliche äußere Einflüsse wie z.B. das Herauslösen durch organische Lösemittel oder die Zersetzung durch wässrige Säuren und Basen. Beispielsweise werden für gängige Lösungsmittel wie Aceton, Ethylacetat, Ethanol, Toluol etc. selbst nach über 1h Verweildauer der Partikel im Medium Retentionsraten von über 90% beobachtet. Eine äquivalente Probe ohne Duromer-Hülle zeigt hingegen z.B. im gleichen Lösemittel bereits nach einer Minute eine Retentionsrate von deutlich unter 10%, der Merkmalsstoff wird also herausgelöst.

Führt man einen qualitativen Stabilitätstest von Druckmustern aus, wird für sichtbare Effekte wie z.B. Lumineszenzpigmente oft eine Einteilung in die folgenden Stufen durchgeführt:
4: keine sichtbare Änderung
3: geringfügige Änderung
2: deutliche Änderung, weniger als 50% beschädigt
1: starke Änderung, mehr als 50% beschädigt
0: Element zerstört

Qualitativ erfolgt die Bewertung der Stabilität im Fall von im VIS absorbierenden oder lumineszierenden Merkmalstoffen anhand der oben genannten Stufen 0-4 durch Betrachtung des angeregten Andrucks mit dem Auge.

Quantitativ erfolgt die Bewertung durch maschinelle Vermessung, z.B. im Falle von Lumineszenz-basierten Merkmalsstoffen durch Vermessung des Emissionsspektrums mit Hilfe eines Fluoreszenzspektrometers oder im Falle von Absorptions-basierten Merkmalsstoffen durch Vermessung des Absorptionsspektrums mit Hilfe eines UV/VIS/NIR-Spektrometers.

Erfahrungsgemäß besitzen lumineszierende Andrucke mit der Stufe 4 ("keine sichtbare Änderung") eine nach dem Test verbleibende Lumineszenzintensität von über 80% bezogen auf die ursprüngliche Lumineszenzintensität. Analog wird für andere Merkmalsstoffe ebenfalls eine verbleibende Signalintensität von über 80% bezogen auf die ursprüngliche Signalintensität als äquivalent zu "Stufe 4" angesehen. Dies wird im Folgenden auch als eine Stabilität von über 80% bezeichnet.

Um die Stabilität der Sicherheitspigmente qualitativ und quantitativ beurteilen zu können, wird im Folgenden ein applikationsnahes Testverfahren beschrieben.

Testverfahren A5 bzw. A30:
- Einbringen der Sicherheitspigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Eintauchen des Andrucks (bzw. eines abgeschnittenen Teils des Andrucks) in die jeweilige Testsubstanz, gegen welche die Stabilität des Andrucks ermittelt werden soll für einen Zeitraum von 5 Minuten (A5) bzw. 30 Minuten (A30)
- Entfernen des Andrucks aus der Testsubstanz und Abwaschen von anhaftender Testsubstanz mit Wasser
- Trocknen des Andrucks bei 60°C für 2h
- Die quantitative Stabilität des Andrucks gegen die Testsubstanz ergibt sich aus dem Vergleich der Signalintensität des Andrucks vor und nach Behandlung mit der Testsubstanz (bzw. dem Vergleich eines unbehandelten Teils des Andrucks mit einem behandelten Teil des gleichen Andrucks); Stabilität = (Intensität nach Behandlung mit Lösemittel) / (Intensität vor Behandlung mit Lösemittel)

Die Sicherheitspigmente auf Basis von Kern-Hülle-Teilchen der vorliegenden Erfindung erreichen in Andrucken dabei für applikationsrelevante Lösemittel, Säuren und Basen die höchste Stufe 4 oder eine Stabilität >80%, selbst wenn Andrucke des gleichen ungeschützten Merkmalstoffs nur die unterste Stufe 0 erreichen.

Gemäß einer bevorzugten Ausführungsform liegt die höchste Stabilitätsstufe "keine sichtbare Änderung" oder eine Stabilität >80%, bevorzugt >90% bei den folgenden applikationsrelevanten Lösungsmitteltests gemäß Testverfahren A5, besonders bevorzugt gemäß Testverfahren A30 vor:
Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor). Dabei beträgt die Einwirkungsdauer 5 bzw. bevorzugt 30 Minuten, um sicherzustellen, dass ein ausreichender langer Kontakt zwischen Sicherheitspigment und Testsubstanz zu Stande kommt.

Gemäß einer weiteren bevorzugten Ausführungsform werden die genannten Stabilitäten ebenfalls für folgende applikationsrelevante Lösungsmittel erfüllt:
- Ethanol
- Trichlorethylen
- Tetrachlorethylen
- Xylol
- Leichtbenzin
- Natriumsulfit-Lösung (10 Gewichtsprozent)
- Schwefelsäure (2 Gewichtsprozent)
- Ammoniaklösung (10 Gewichtsprozent)

Gemäß einer bevorzugten Ausführungsform sind die Sicherheitspigmente selbst gegen besonders aggressive chemische Lösungsmittel für mindestens 5 Minuten stabil, z.B. Aceton. Insbesondere ist Aceton in der Lage, die meisten organischen Merkmalsstoffe des Stands der Technik anzugreifen.

Generell ist zu beachten, dass der für den Test verwendete Drucklack bzw. das Substrat auf dem aufgedruckt wird selbst im Test stabil sein muss, dies ist für die im Sicherheitsdruck von Wertdokumenten verwendeten Lacke und Substrate generell erfüllt. Die Stabilität des Drucklacks/Substrats lässt sich beispielsweise mit inerten Lumineszenzstoffen (z.B. anorganischen Phosphoren) oder inerten Absorberstoffen (z.B. anorganischen Farbpigmenten) prüfen.

Als Merkmalsstoffe eignen sich vor allem organische oder metallorganische Moleküle, die in unpolaren organischen Lösemitteln gelöst werden können. Die Einbringung von anorganischen Pigmentpartikeln oder Quantendots etc. ist schwierig und daher nicht bevorzugt.

Gemäß einer bevorzugten Ausführungsform handelt es sich bei dem Merkmalsstoff um einen Lumineszenzfarbstoff. Gemäß einer bevorzugten Ausführungsform handelt es sich bei dem Lumineszenzfarbstoff um einen Fluoreszenzfarbstoff. Gemäß einer weiteren bevorzugten Ausführungsform handelt es sich bei dem Lumineszenzfarbstoff um einen Phosphoreszenzfarbstoff. Gemäß einer weiteren bevorzugten Ausführungsform handelt es sich bei dem Lumineszenzfarbstoff um einen im UV-Bereich anregbaren Lumineszenzfarbstoff, welcher im sichtbaren Spektralbereich emittiert. Gemäß einer weiteren bevorzugten Ausführungsform handelt es sich um einen im sichtbaren Spektralbereich anregbaren Lumineszenzfarbstoff, welcher im sichtbaren Spektralbereich emittiert. Gemäß einer weiteren bevorzugten Ausführungsform handelt es sich um einen im Infrarot-Bereich emittierenden Lumineszenzfarbstoff. Bei den Farbstoffen kann es sich sowohl um rein organische Moleküle, als auch um metallorganische Komplexe handeln.

Gemäß einer bevorzugten Ausführungsform werden zwei oder mehr fluoreszierende oder phosphoreszierende Lumineszenzfarbstoffe gemischt, um ein Energietransfersystem bzw. FRET-System zu erstellen, in welchem der erste Lumineszenzfarbstoff nach Anregung seine Anregungsenergie partiell oder vollständig an den zweiten Lumineszenzfarbstoff abgeben kann. Im Falle eines derartigen FRET-Systems ist einer der beteiligten Lumineszenzfarbstoffe bevorzugt im UV-Bereich anregbar und emittiert im sichtbaren Spektralbereich, während der andere Lumineszenzfarbstoff im sichtbaren Spektralbereich anregbar ist und im sichtbaren Spektralbereich emittiert.

Beispiele für Stoffklassen von UV-anregbaren bzw. im sichtbaren Spektralbereich anregbaren Lumineszenzfarbstoffen, welche im sichtbaren Spektralbereich emittieren, sind rein organische Lumineszenzfarbstoffe und lumineszierende Metallkomplexe. Mögliche Farbstoffklassen sind zum Beispiel Diarylpolyene, Diarylethene, Arylacetylene, Oxazole, Pyrazole, Benzazole, Anthrone, Chinone, Cyanine, Rhodamine, Oxazine, Phenoxazine, Thiazine, Phenothiazine, Perylene, Terylene, Coumarine, Benzoxazinone oder Benzothiazinone sowie Seltenerdmetallkomplexe, wie z.B. β-Diketonat-Seltenerdmetallkomplexe oder Dipicolinat-Seltenerdmetallkomplexe, dabei bevorzugt neutral geladene Seltenerdmetallkomplexe. Andere organische Lumineszenzfarbstoffklassen sind ebenfalls einsetzbar.

Insbesondere werden als Farbstoffklasse für im sichtbaren Spektralbereich anregbare Lumineszenzfarbstoffe welche im Sichtbaren emittieren aufgrund ihrer hohen Lichtstabilität bevorzugt Perylenfarbstoffe eingesetzt.

Beispiele für geeignete im Infrarot emittierende Lumineszenzfarbstoffe sind organische Fluoreszenzfarbstoffe oder lumineszierende Metallkomplexe wie IR-1048, Cy7 oder Nd(TTA)₃ (Neodym-tris-thenoyltrifluoroacetonat).

Beispiele für FRET-Systeme sind z.B. Mischungen aus einem grün-gelb anregbaren Fluoreszenzfarbstoff und einem grün-gelb emittierenden Fluoreszenzfarbstoff, beispielsweise eine Mischung mit einem Gewichtsverhältnis von 1:15 aus 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄, ein grün anregbarer Perylenfarbstoff welcher eine orange Lumineszenzemission besitzt, im weiteren "F-Orange" genannt) und N-(2-(4-oxo-4H-benzo [d] [1,3] oxazin-2-yl)phenyl)naphthalen-2-sulfonamid (C₂₄H₁₆N₂O₄S, ein UV-anregbarer Lumineszenzfarbstoff welcher eine grüne Lumineszenzemission besitzt, im weiteren "F-Grün" genannt).

Ein FRET-System kann auch dazu dienen, eine forensische Komponente in einem Lumineszenzpigment auszulesen. So kann der Akzeptor-Farbstoff nicht nur durch einen Energietransfer des Donorfarbstoffes angeregt werden, sondern auch eine direkte Anregung des Akzeptorfarbstoffes kann zu dessen Lumineszenz führen. Beispielsweise kann eine Mischung aus F-Orange und F-Grün einerseits im UV-A-Bereich, z.B. bei 365 nm, angeregt werden (Anregung des F-Grün gefolgt von Energieübertrag auf F-Orange). Andererseits kann für einen forensischen Test auch das F-Orange direkt angeregt werden, beispielsweise durch Licht der Wellenlänge 525 nm. Die direkte Anregung des Akzeptorstoffes kann somit verwendet werden, um FRET-Systeme von anderen Farbstoffsystemen zu unterscheiden, und bietet eine zusätzliche Sicherheitsstufe, die z.B. in einem Labor oder automatisch von Sensoren ausgewertet werden kann.

Gemäß einer bevorzugten Ausführungsform enthält das Lumineszenzpigment daher ein Energietransfersystem (FRET-System), bevorzugt ein FRET-System aus einem UV-anregbaren Lumineszenzfarbstoff als Donor und einem im sichtbaren Bereich anregbaren Lumineszenzfarbstoff als Akzeptor. Bevorzugt handelt es sich bei dem Akzeptor um einen Perylenfarbstoff. Bevorzugt wird der Akzeptor als forensischer Marker verwendet.

Gemäß einer bevorzugten Ausführungsform handelt es sich bei dem Merkmalsstoff um einen Absorberfarbstoff für unsichtbare Strahlung, z.B. einen Infrarot-Absorber oder UV-Absorber.

Bevorzugt handelt es sich bei dem Merkmalsstoff um einen Infrarotabsorber. Besonders bevorzugt weist der Infrarotabsorber im sichtbaren Spektralbereich keine oder nur eine geringe Absorption auf. Gemäß einer bevorzugten Ausführungsform sind die Absorber schmalbandig (z.B. mit einem FWHM (Halbwertsbreite, "full width at half maximum") von weniger als 200 nm) oder scharfbandig (z.B. mit einem FWHM von weniger als 30 nm) und absorbieren damit in einem engen Spektralbereich. Gemäß einer weiteren bevorzugten Ausführungsform absorbieren die Absorber breitbandig (z.B. mit einem FWHM von mehr als 200 nm). Gemäß einer bevorzugten Ausführungsform liegt das Absorptionsmaximum des Infrarotabsorbers im Bereich von 700 nm bis 900 nm, bevorzugt in einem Bereich von 700 nm bis 800 nm, und ist damit geeignet, um über Standard-Infrarotsensoren für Banknoten ausgelesen zu werden. Gemäß einer weiteren bevorzugten Ausführungsform liegt das Absorptionsmaximum des Infrarotabsorbers oberhalb von 900 nm, weiter bevorzugt oberhalb von 950 nm, insbesondere bevorzugt im Bereich von 1000 nm bis 1100 nm, und wird dadurch von Standard-Infrarotsensoren für Banknoten nicht erfasst, kann jedoch durch spezielle Infrarotsensoren für Banknoten erfasst werden.

Gemäß einer bevorzugten Ausführungsform liegt das Absorptionsmaximum oder eine starke Absorptionsbande des UV-Absorbers im UV-A-Bereich von 315 nm bis 380 nm, insbesondere bevorzugt im Bereich von 350 nm bis 380 nm. Gemäß einer weiteren bevorzugten Ausführungsform liegt das Absorptionsmaximum oder eine starke Absorptionsbande des UV-Absorbers im UV-B/C-Bereich von 200 nm bis 315 nm, weiter bevorzugt von 220 nm bis 290 nm, insbesondere bevorzugt von 240 nm bis 270 nm.

Geeignete Infrarotabsorber sind beispielsweise kommerziell bei der Firma Fujifilm Imaging Colorants (z.B. CKK-55), der Firma BASF (z.B. Lumogen IR-Absorber) oder der Firma Epolin unter dem Markennamen Epolight erhältlich. Beispielsweise absorbiert Epolight 4101 schmalbandig bei 739 nm und zeigt bei verdünnter Einbringung in ein Polymer keine merkliche Eigenfarbe. Ebenso absorbiert beispielsweise Epolight 4831 schmalbandig bei 1000 nm und zeigt bei verdünnter Einbringung in ein Polymer keine merkliche Eigenfarbe.

Geeignete UV-Absorber sind beispielsweise bei der Firma BASF unter den Markennamen Tinuvin und Chimassorb erhältlich. Beispielsweise besitzt Tinuvin 326 eine starke Absorptionsbande bei 360 nm und Chimassorb 81 eine starke Absorptionsbande bei 330 nm.

Gemäß einer bevorzugten Ausführungsform handelt es sich bei dem Merkmalsstoff um einen schaltbaren Farbstoff. Bevorzugt handelt es sich um einen thermochromen oder photochromen Farbstoff. Gemäß einer bevorzugten Ausführungsform handelt es sich bei dem schaltbaren Farbstoff um eine photochrome Verbindung. Bevorzugt handelt es sich um eine photochrome Verbindung, die zwischen einem ersten sichtbaren Zustand und einem zweiten sichtbaren oder unsichtbaren Zustand schaltbar ist. Bevorzugt wird der Schaltvorgang in eine Richtung durch Bestrahlung mit UV-Licht durchgeführt, während das Rückschalten entweder von alleine (thermisch) oder durch Bestrahlung mit sichtbarem Licht erfolgt.

Gemäß einer bevorzugten Ausführungsform sind die photochromen Farbstoffe ebenfalls Lumineszenzfarbstoffe. Dabei können beide oder nur einer der Schaltungszustände des Farbstoffs zur Lumineszenz fähig sein. Die verschiedenen Schaltungszustände können identische Lumineszenzeigenschaften besitzen (z.B. Emission bei der gleichen Wellenlänge) oder verschiedene Lumineszenzeigenschaften besitzen (z.B. Wechsel der Emissionswellenlänge nach Schaltvorgang).

Gemäß einer bevorzugten Ausführungsform befindet sich die durch den Schaltvorgang erzeugte Absorptionsbande oder Emissionsbande, insbesondere die erzeugte Absorptionsbande, im sichtbaren Spektralbereich. Gemäß einer weiteren bevorzugten Ausführungsform befindet sich die durch den Schaltvorgang erzeugte Absorptionsbande oder Emissionsbande im Infrarotbereich, z.B. in einem Bereich von 700 nm bis 900 nm.

Beispiele für geeignete thermochrome Farbstoffe sind beispielsweise (a) organische Moleküle, welche bei Wechsel der Temperatur durch Strukturänderung ihre Farbe ändern, wie 9,9'-Bixanthyliden und 10,10'-Bianthronyliden; (b) Kombinationen aus einem Leucofarbstoff (z.B. Spirolactone, Spiropyrane) und einem reversiblen Protonendonor (z.B. Bisphenol A, 1,2,3-Triazole) und einem Phasenwechselmaterial (z.B. Paraffin), welche bei Wechsel der Temperatur durch Protonierung/Deprotonierung des Leucofarbstoffs die Farbe wechseln; (c) Farbstoffe oder Metallkomplexe, welche ihre Farbintensität temperaturabhängig verändern, z.B. Temperatur-Quenching bei Europiumkomplexen; und (d) Kombinationen aus mehreren Farbstoffen mit unterschiedlichem Temperaturverhalten (z.B. einer Mischung aus Terbium- und Europiumkomplexen, wie sie u.a. in der Schrift EP 0256922 B1 beschrieben wird, welche temperaturabhängig rot oder grün lumineszieren kann).

Hierbei sind (a) und (d) aufgrund des klaren Farbwechsels bevorzugt und (b) aufgrund der Komplexität und schwierigen Umsetzung weniger bevorzugt.

Beispiele für geeignete photochrome Farbstoffe sind beispielsweise Spiropyrane, Stilbene/Azastilbene, Triarylmethane, Nitrone, Fulgide, Naphthopyrane, Spirooxazine, Quinone und Diarylethene. Aufgrund ihrer hohen Lichtstabilität sind Diarylethene bevorzugt. Beispielsweise absorbiert das Diarylethen BTF6 (=1,2-bis(2-methyl-1-benzothiophen-3-yl)perfluorocyclopenten) in der offenen Ringstruktur im UV-Bereich bei 200 nm bis 300 nm und besitzt keine merklichen Absortionsbanden im sichtbaren Spektralbereich, ist also farblos. Nach Bestrahlung mit UV-Licht der Wellenlänge 254 nm wandelt es sich jedoch in die geschlossene Ringstruktur um, welche eine Absorptionsbande im sichtbaren Spektralbereich bei 530 nm aufweist, also farbig ist. Bei Anregung mit UV-Licht der Wellenlänge 315 nm emittieren sowohl die geschlossene, als auch die offene Ringstruktur bei 450 nm, es handelt sich also gleichzeitig um einen Lumineszenzfarbstoff.

Durch Abwarten (thermisch) oder Bestrahlung mit sichtbarem Licht, z.B. Licht der Wellenlänge 400 nm, lässt sich die geschlossene Ringstruktur wieder in die offene Ringstruktur zurückführen.

Weiterhin ist es möglich, durch gezielte Kombination (bzw. gemeinsame Verkapselung) unterschiedlicher Merkmalstoffe komplexere Codierungen zu erzeugen und Merkmalspartikel zu erzeugen, die für unterschiedliche maschinenlesbare Nachweisverfahren gleichzeitig geeignet sind.

Zusätzlich zu dem Merkmalsstoff können dem Kernmaterial oder Hüllmaterial, bevorzugt dem Kernmaterial, weitere Additive zugesetzt werden.

Gemäß einer bevorzugten Ausführungsform werden den Polymerpartikeln sogenannte Weichmacher zugesetzt, beispielsweise Diethylhexyladipat, Dibutylphthalat oder Diisononylphthalat. Als Stoffklassen können hier Dieester der Phtalsäure, Dieester der Adipinsäure und Dieester der Sebacinsäure mit längerkettigen Monoalkoholen (2-Ethylhexanol, Isononanol, Decylalkohol, Fettalkohole, Benzylalkohol, Glykolether), Triester der Citronensäure, Phosphorsäureester längerkettiger aliphatischer Alkohole, Dibenzoesäureester von aliphatischen Alkoholen, Ester von Fettsäuren mit aliphatischen Alkoholen, Diester von Polyethylenglykolethern, Ester von Harzsäuren mit längerkettigen, aliphatischen Alkoholen, Weichmacher auf Basis epoxidierter Fettsäureester oder epoxidierter Öle, Kohlenstoffweichmacher und chlorierte Paraffine eingesetzt werden. Hierdurch können die mechanischen Eigenschaften des Polymerkerns angepasst werden. Insbesondere kann die Aufnahmefähigkeit des Kernmaterials für bestimmte Merkmalsstoffe erhöht werden.

Bevorzugt werden relativ zur Masse des Kernmaterials 0,1 bis 5 Gewichtsprozent Weichmacher zugesetzt, weiter bevorzugt 0,2 bis 2 Gew.- %, insbesondere bevorzugt 0,3 bis 0,6 Gew.-%.

Gemäß einer weiteren bevorzugten Ausführungsform werden dem Kernmaterial UV-Absorber zugesetzt. Hierdurch kann z.B. die Lichtechtheit des Merkmalstoffes verbessert werden.

Gemäß einer bevorzugten Ausführungsform werden dem Kernmaterial UV-Absorber zugesetzt. Hierdurch kann z.B. Lichtechtheit des Merkmalstoffes verbessert werden.

Geeignete UV-Absorber sind beispielsweise bei der Firma BASF unter dem Markennamen Tinuvin und Chimassorb erhältlich, beispielsweise Chimassorb 81.

Gemäß einer weiteren bevorzugten Ausführungsform werden dem Kernmaterial Farbstoffe zugefügt. Hierdurch kann z.B. die Eigenfärbung der Pigmente angepasst werden (z.B. rot oder blau). Ebenso können Farbstoffe verwendet werden, um Anregungs- oder Emissionsspektren der Merkmalstoffe zu modulieren.

Die Sicherheitspigmente werden bevorzugt für die Herstellung von Wertdokumenten verwendet. Dies geschieht bevorzugt durch Aufdrucken in einer Druckfarbe, insbesondere für Offsetdruck, Siebdruck oder Stahlstichtiefdruck. Anstatt die Pigmente direkt in den Drucklack bzw. die Druckfarbe einzuarbeiten kann aus den Pigmenten auch zuerst ein Farbkonzentrat hergestellt werden. Diese hat z.B. einem Pigmentanteil von 50% und kann später in den Drucklack bzw. die Druckfarbe eingearbeitet werden. Dies hat anwendungstechnische Vorteile wie z.B. eine schnellere Einarbeitung oder das Vermeiden von Stauben bei der Einarbeitung.

Alternativ können die Sicherheitspigmente auch in eine Polymermasse eingearbeitet werden, bevorzugt um ein Masterbatch zu erzeugen, oder ein Wertdokument-Substrat, eine Sicherheitsfolie, eine Melierfaser oder einen Sicherheitsfaden herzustellen. Dies kann beispielsweise durch Extrusion erfolgen.

Die Erfindung wird nachstehend anhand von Ausführungsbeispielen näher beschrieben.

### Ausführungsbeispiel 1: Blaues Lumineszenzpigment (gemäß Fall A)

2,7 g Polystyrol der mittleren Molmasse 80000 g/mol, 150 mg 4,4'-Bis(2-methoxystyryl)-1,1'-biphenyl (C₃₀H₂₆O₂) und 25 mg Dibutylphthalat werden unter Rühren in 50 g Dichlormethan gelöst (Lösung 1A).

7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 1B).

In 247,5 g Wasser werden 2,5 g Natriumdodecylsulfat (Sigma Aldrich) gelöst (Lösung 1C).

Lösung 1A wird zu Lösung 1C gegeben und 30 Sekunden mit einem Dispergierwerkzeug (Ultraturrax) dispergiert. Während dieser Zeit werden 20 mL Lösung 1B und 1 mL Essigsäure zugegeben. Anschließend wird die Dispersion mit einem Magnetrührer weiter gerührt.

Nach 2 h Rühren bei Raumtemperatur wird die Dispersion auf 39°C erhitzt und 1,5 h bei dieser Temperatur gehalten, um das Dichlormethan zu verdampfen. Anschließend werden weitere 20 mL der Lösung 1B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.

Die Partikel werden mit einem Dreiwalzenstuhl zu einem Gewichtsanteil von 15% in einen Offsetlack (Sicpa Holding SA) eingebracht. Der Lack wird mit einer Andruckstärke von 2 g/m² auf einen Andruckstreifen gedruckt.

Bei Bestrahlung mit UV-Licht der Wellenlänge 365 nm luminesziert der zuvor farblose Andruck blau.

Der Andruck zeigt eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 2: Rotes Lumineszenzpigment (gemäß Fall B)

"PMMA-NH2-R" bezeichnet Amino-funktionalisierte PMMA-Kugeln der Größe 2 µm mit einem durchschnittlichen Molgewicht des PMMA von 100000 g/mol und einer NH₂-Funktionalisierungdichte von 2,25 nmol/cm² welche 280 mg Eu(TTA)₃(TPPO)₂ (TTA = Thenoyltrifluoroaceton; TPPO = Triphenylphosphinoxid) enthalten.

7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 2A).

Eine wässrige Lösung mit 2,7g PMMA-NH2-R in 250mL Wasser wird mit 20 mL Lösung 2A und 1 mL Essigsäure versetzt und unter Einsatz von Schwerkräften mit einem linear steigenden Temperaturprofil über 4 Stunden von 25°C bis 70°C erwärmt. Anschliessend werden weitere 20 mL Lösung 2A zugegeben und die Mischung weitere 1,5 Stunden bei 70°C gehalten.

Die erhaltenen Partikel werden von der Lösung separiert, mit Wasser gewaschen und bei 60°C getrocknet.

Das erhaltene Pigment wird mit einer Konzentration von 15% in einen Offsetlack (hubergroup Deutschland GmbH) mit einem Dreiwalzenstuhl eingebracht und mit einem Andruckgewicht von 2 g/m² im Offsetdruck angedruckt. Es wird ein bei 365nm-Anregungslicht rot fluoreszierender Andruck erhalten.

Der Andruck zeigt eine hohe Stabilität gegen organische Lösemittel sowie wässrige Säuren und Basen, während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Beispiel 3 (Vergleichsbeispiel): Gelbes Fluoreszenzpigment (gemäß Fall C)

50 g PMMA-Kugeln mit einem durchschnittlichen Molgewicht von 100000 g/mol werden mit 2,8 g N-(2-(4-oxo-4H-benzo[d][1,3]oxazin-2-yl)phenyl)naphthalen-2-sulfonamid (C₂₄H₁₆N₂O₄S) und 0,2 g 2,9-Bis(2,6-diisopropylphenyl)anthra[2,1,9-def:6,5,10-d'e'f']diisochinolin-1,3,8,10(2H,9H)-tetraon in 1 Liter Dichlormethan gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft. Die verbleibende wässrige Phase enthält nach Entfernen des Dichlormethans ca. 53 g Kugeln aus PMMA mit einer mittleren Partikelgröße von ca. 2 µm, welche die beiden gelösten Farbstoffe enthalten (im Folgenden "PMMA G" genannt). Mit einer Ultrazentrifuge werden die Partikel dreimal mit je 1 Liter Wasser gewaschen und bei 60°C anschließend getrocknet.

In einem Laborkneter werden die Komponenten
79,63 g des Isocyanurat-Trimeren von Isophorondiisocyanat
22,46 g Benzamid
2,00 g Harnstoff
14,12 g Melamin
10 g PMMA G
bei 180°C bis zum Erstarren geknetet. Das erhaltene Granulat wird auf eine Korngröße (d99) von 11 µm gemahlen.

Von diesem Pulver werden 50 g in 0.65 l Wasser gegeben und mit einem Homogenisator dispergiert. Zu dieser Mischung werden 450 ml einer 20% igen wässrigen Lösung aus Hexahydroxymethylmelamin gegeben und mit 4 ml konzentrierter Essigsäure versetzt. Die erhaltene Reaktionsmischung wird für 2 h bei 70 °C erhitzt. Das erhaltene beschichtete Pigment wird abzentrifugiert und mit 2 l Wasser gewaschen. Nach einem letzten Zentrifugationsschritt wird das Pigment bei 60°C in einem Trockenschrank getrocknet.

Das erhaltene Pigment wird mit einer Konzentration von 15% in einen Offsetlack (Sicpa Holding SA) mit einem Dreiwalzenstuhl eingebracht und mit einem Andruckgewicht von 2 g/m² im Offsetdruck angedruckt. Es wird ein bei 365nm-Anregungslicht gelb fluoreszierender Andruck erhalten.

Der Andruck zeigt eine hohe Stabilität gegen organische Lösemittel sowie wässrige Säuren und Basen, während Andrucke der reinen Farbstoffe nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 4: Photochromes Pigment (gemäß Fall A)

2,7 g Polymethylmethacrylat (PMMA) der mittleren Molmasse 100000 g/mol und 180 mg Cis-1,2-dicyano-1,2-bis(2,4,5-trimethyl-3-thienyl)ethen (C₁₈H₁₈N₂S₂) werden unter Rühren in 50 g Dichlormethan gelöst (Lösung 4A).

7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 4B).

In 247,5 g Wasser werden 2,5 g Natriumdodecylsulfat gelöst (Lösung 4C).

Lösung 4A wird zu Lösung 4C gegeben und 30 Sekunden mit einem Dispergierwerkzeug (Ultraturrax) dispergiert. Während dieser Zeit werden 20 mL Lösung 4B und 1 mL Essigsäure zugegeben. Anschließend wird die Dispersion mit einem Magnetrührer weiter gerührt.

Die Dispersion wird 30 Minuten gerührt und anschließend bei 500 mbar Unterdruck für 1 h gerührt um das Dichlormethan zu verdampfen. Anschließend werden weitere 20 mL der Lösung 4B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.

Die Partikel werden mit einem Dreiwalzenstuhl zu einem Gewichtsanteil von 15% in einen Offsetlack (Sicpa Holding SA) eingebracht. Der Lack wird mit einer Andruckstärke von 2 g/m² auf einen Andruckstreifen gedruckt.

Bei Bestrahlung mit UV-Licht der Wellenlänge 330 nm wechselt der Andruck die Farbe von farblos nach rot, und färbt sich thermisch oder durch Bestrahlung mit sichtbarem Licht (z.B. der Wellenlänge 520 nm) wieder zurück.

Der Andruck zeigt eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 5: Gelbes Lumineszenzpigment (gemäß Fall B)

"PMMA-NH2-G" bezeichnet Amino-funktionalisierte PMMA-Kugeln der Größe 2 µm mit einem durchschnittlichen Molgewicht des PMMA von 100000 g/mol und einer NH₂-Funktionalisierungdichte von 2,25 nmol/cm² welche eine Mischung aus 280 mg N-(2-(4-oxo-4H-benzo[d][1,3]oxazin-2-yl)phenyl)naphthalen-2-sulfonamid (C₂₄H₁₆N₂O₄S) und 20 mg 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄) enthalten.

7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 5A).

Eine wässrige Lösung mit 2,7g PMMA-NH2-R in 250mL Wasser wird mit 20 mL Lösung 5A und 1 mL Essigsäure versetzt und unter Einsatz von Schwerkräften mit einem linear steigenden Temperaturprofil über 4 Stunden von 25°C bis 70°C erwärmt. Anschliessend werden weitere 20 mL Lösung 5A zugegeben und die Mischung weitere 1,5 Stunden bei 70°C gehalten.

Die erhaltenen Partikel werden von der Lösung separiert, mit Wasser gewaschen und bei 60°C getrocknet.

Das erhaltene Pigment wird mit einer Konzentration von 15% in eine wasserbasierte Siebdruckfarbe (Pröll KG) mit einem Dreiwalzenstuhl eingebracht und mit einem Andruckgewicht von 6 g/m² im Siebdruck angedruckt.

Es wird ein bei 365nm-Anregungslicht gelb fluoreszierender Andruck erhalten.

Der Andruck zeigt eine hohe Stabilität gegen organische Lösemittel sowie wässrige Säuren und Basen, während Andrucke der reinen Farbstoffe nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Beispiel 6 (Vergleichsbeispiel): IR-absorbierendes Pigment (gemäß Fall C)

25 g PMMA-Kugeln mit einem durchschnittlichen Molgewicht von 80000 g/mol werden mit 1 g des IR-Absorbers CKK-55 (Fujifilm Imaging Colorants) und 0.25 g Dibutylphthalat in 0.5 Liter Dichlormethan gelöst. Die Mischung wird in einen Reaktor mit 2.5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft.

Die verbleibende wässrige Phase enthält nach Entfernen des Dichlormethans ca. 26 g Kugeln aus PMMA mit einer mittleren Partikelgröße von ca. 2 µm, welche gelösten IR-Absorber CKK-55 enthalten (im Folgenden "PMMA CKK-55" genannt). Mit einer Ultrazentrifuge werden die Partikel dreimal mit je 1 Liter Wasser gewaschen und bei 60°C anschließend getrocknet.

In einem Laborkneter werden die Komponenten
71.8 g Isophorondiisocyanat
22.7 g Benzamid
20.09 g Melamin
10 g PMMA CKK-55
bei 180°C bis zum Erstarren geknetet. Das erhaltene Granulat wird auf eine Korngröße (d99) von 11 µm gemahlen.

Von diesem Pulver werden 50 g in 0.65 l Wasser gegeben und mit einem Homogenisator dispergiert. Zu dieser Mischung werden 450 ml einer 20% igen wässrigen Lösung aus Hexahydroxymethylmelamin gegeben und mit 4 ml konzentrierter Essigsäure versetzt. Die erhaltene Reaktionsmischung wird für 2 h bei 70 °C erhitzt. Das erhaltene beschichtete Pigment wird abzentrifugiert und mit 2 l Wasser gewaschen. Nach einem letzten Zentrifugationsschritt wird das Pigment bei 60°C in einem Trockenschrank getrocknet.

Das erhaltene Pigment wird mit einer Konzentration von 15% in einen Offsetlack (hubergroup Deutschland GmbH) mit einem Dreiwalzenstuhl eingebracht und mit einem Andruckgewicht von 2 g/m² im Offsetdruck angedruckt. Der Andruck zeigt eine Absorptionsbande im NIR-Bereich bei 850 nm.

Der Andruck zeigt eine hohe Stabilität gegen organische Lösemittel sowie wässrige Säuren und Basen, während Andrucke des reinen Absorbers nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Beispiel 7: Pigment mit UV-Absorber und Eigenfarbe (gemäß Fall A)

2,7 g Polystyrol der mittleren Molmasse 192000 g/mol, 100 mg Sudanblau II (1,4-Bis-(butylamino)-antrachinon, C₂₂H₂₆N₂O₂) und 50 mg 2-Hydroxy-4-(octyloxy)benzophenon (CH₃(CH₂)₇OC₆H₃(OH)COC₆H₅) werden unter Rühren in 50 g Ethylacetat gelöst (Lösung 7A).

7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 7B).

In 247,5 g Wasser werden 2,5 g Teepol 610 S (Sigma Aldrich) gelöst (Lösung 7C).

Lösung 7A wird zu Lösung 7C gegeben und 30 Sekunden mit einem Dispergierwerkzeug (Ultraturrax) dispergiert. Während dieser Zeit werden 20 mL Lösung B und 1 mL Essigsäure zugegeben. Anschließend wird die Dispersion mit einem Magnetrührer weiter gerührt.

Die Dispersion wird 12h bei Raumtemperatur gerührt um das Ethylacetat zu verdampfen. Anschließend werden weitere 20 mL der Lösung 7B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.

Das erhaltene Pigment wird mit einer Konzentration von 15% in eine wasserbasierte Siebdruckfarbe (Pröll KG) mit einem Dreiwalzenstuhl eingebracht und mit einem Andruckgewicht von 6 g/m² im Siebdruck angedruckt. Es wird ein Andruck erhalten, welcher blau gefärbt ist und zusätzlich eine Absorptionsbande im Bereich 280-350 nm besitzt.

Der Andruck zeigt eine hohe Stabilität gegen organische Lösemittel sowie wässrige Säuren und Basen, während Andrucke des reinen Farbstoffs bzw. Absorbers nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

## Patentansprüche

1. Sicherheitspigment aus chemisch stabilen Kern-Hülle-Teilchen, umfassend einen auf einem thermoplastischen Polymer basierenden Kern, eine auf einem Kondensationspolymer basierende Hülle und einen im Kern in gelöster oder fein verteilter Form vorliegenden organischen oder metallorganischen Merkmalsstoff, wobei der Massenanteil der Hülle mehr als 25% relativ zur Masse des Kerns beträgt, um den Kern-Hülle-teilchen chemische Stabilität zu verleihen, das Kondensationspolymer aus Melamin-Formaldehyd-Harzen (MF) gewählt ist und der Merkmalstoff ein fluoreszierender oder phosphoreszierender oder photochromer oder thermochromer Merkmalstoff oder ein UV- oder IR- oder VIS-Absorptionsfarbstoff ist.

2. Sicherheitspigment nach Anspruch 1, wobei das thermoplastische Polymer gewählt ist aus Polystyrol (PS), Polyacrylaten, Polyethylen (PE), Polypropylen (PP), Polycarbonaten (PC), Polyamiden (PA), Polyurethanen (PU), Polyharnstoffen (PH), Polyethylenterephthalat (PET) oder anderen Polyestern, Polyvinylacetat (PVAC), Polyvinylchlorid (PVC) oder Polyacrylnitril (PAN).

3. Sicherheitspigment nach einem der Ansprüche 1 oder 2, wobei das Kern-Hülle-Teilchen genau einen Kern und eine Hülle umfasst.

4. Sicherheitspigment nach einem der Ansprüche 1 bis 3, wobei das Kern-Hülle-Teilchen mehrere Kerne und eine Hülle umfasst.

5. Sicherheitspigment nach einem der Ansprüche 1 bis 4, wobei der Merkmalstoff im thermoplastischen Polymer gelöst vorliegt.

6. Sicherheitspigment nach einem der Ansprüche 1 bis 5, wobei der fluoreszierende oder phosphoreszierende Merkmalstoff im UV-Spektralbereich anregbar ist und im sichtbaren Spektralbereich emittiert.

7. Sicherheitspigment nach einem der Ansprüche 1 bis 6, wobei der fluoreszierende oder phosphoreszierende Merkmalstoff im IR-Spektralbereich emittiert.

8. Sicherheitspigment nach einem der Ansprüche 1 bis 7, wobei im Kern zwei unterschiedliche lumineszierende Farbstoffe in fein verteilter oder gelöster Form vorliegen, die ein Energietransfersystem bilden, bei dem der erste lumineszierende Farbstoff nach Anregung seine Anregungsenergie partiell oder vollständig an den zweiten lumineszierenden Farbstoff transferiert.

9. Verfahren zum Herstellen eines Sicherheitspigments aus Kern-Hülle-Teilchen nach einem der Ansprüche 1 bis 8, umfassend einen auf einem thermoplastischen Polymer basierenden festen Kern, eine auf einem Kondensationspolymer basierende Hülle und einen im Kern in gelöster oder fein verteilter Form vorliegenden organischen oder metallorganischen Merkmalsstoff, aufweisend
a) den Schritt des Lösens des Merkmalsstoffs zusammen mit dem thermoplastischen Polymer in einem organischen Lösungsmittel und das Dispergieren der erhaltenen Lösung in Wasser mittels eines Tensids;
b) das Bereitstellen der in einer Kondensationsreaktion zu polymerisierenden Präpolymer-Einheiten bei einem bestimmten pH-Wert, um die Kondensation des die Hülle bildenden Polymers um die dispergierten Tröpfchen des organischen Lösungsmittels zu erzielen;
c) das Entfernen des organischen Lösungsmittels, um die Kern-Hülle-Teilchen mit festem Kern zu bilden.

10. Verfahren nach Anspruch 9, umfassend d) das Verstärken der Hülle der Kern-Hülle-Teilchen durch Zugabe weiterer zu polymerisierender Präpolymer-Einheiten,
wobei der Massenanteil der Hülle mehr als 25% relativ zur Masse des Kerns beträgt.

11. Verfahren zum Herstellen eines Sicherheitspigments aus Kern-Hülle-Teilchen nach einem der Ansprüche 1 bis 8, umfassend einen auf einem thermoplastischen Polymer basierenden festen Kern, eine auf einem Kondensationspolymer basierende Hülle und einen im Kern in gelöster oder fein verteilter Form vorliegenden organischen oder metallorganischen Merkmalsstoff, aufweisend
a) den Schritt des Erzeugens des auf einem thermoplastischen Polymer basierenden Kerns, in dem der Merkmalsstoff in gelöster oder fein verteilter Form vorliegt, wobei das thermoplastische Polymer an seiner Außenseite funktionelle Gruppen aufweist, die dafür geeignet sind, dass Präpolymer-Einheiten zur Erzeugung der Hülle daran kovalent anbinden können;
b) den Schritt des Erzeugens der Hülle aus in einer Kondensationsreaktion polymerisierenden Präpolymer-Einheiten, die durch Reaktion mit den funktionellen Gruppen des thermoplastischen Kerns direkt an den Kern anwachsen,
wobei der Massenanteil der Hülle mehr als 25% relativ zur Masse des Kerns beträgt.

12. Verfahren nach Anspruch 11, wobei die funktionellen Gruppen ausgewählt sind aus Amingruppen, Amidgruppen, Isocyanatgruppen, Aldehydgruppen oder Hydroxylgruppen.

13. Verfahren nach Anspruch 11 oder 12, wobei die funktionellen Gruppen in einer Konzentration von 0,1 nmol/cm² bis 10 nmol/cm² an der Außenoberfläche des auf dem thermoplastischen Polymer basierenden Kern vorliegen.

14. Verfahren zum Herstellen eines Sicherheitspigments aus Kern-Hülle-Teilchen nach einem der Ansprüche 1 bis 8, umfassend einen auf einem thermoplastischen Polymer basierenden festen Kern, eine auf einem Kondensationspolymer basierende Hülle und einen im Kern in gelöster oder fein verteilter Form vorliegenden organischen oder metallorganischen Merkmalsstoff, aufweisend
a) den Schritt des Lösen eines organischen oder metallorganischen Merkmalstoffes in einem thermoplastischen Polymer, um auf diese Weise Thermoplast-Partikel mit darin gelöstem Merkmalstoff bereitzustellen; und
b) den Schritt des Einbringens der im Schritt a) erhaltenen Thermoplast-Partikel mit darin gelöstem Merkmalstoff in eine Duromer-Matrix
c) den Schritt des Vermahlens der im Schritt b) erhaltenen Erzeugnisses zu Pigmentpartikeln,
wobei der Massenanteil der Hülle mehr als 25% relativ zur Masse des Kerns beträgt.

15. Verfahren nach Anspruch 14, wobei die in Schritt a) bereitgestellten Thermoplast-Partikel mit darin gelöstem Merkmalstoff wie folgt hergestellt werden:
- Lösen des Merkmalsstoffs zusammen mit dem thermoplastischen Polymer in einem organischen Lösungsmittel und Dispergieren der erhaltenen Lösung in Wasser mittels eines Tensids, gefolgt von Entfernen des organischen Lösungsmittels; oder
- Einbringen des Merkmalstoffs in das thermoplastische Polymer in der Schmelze, gefolgt von Vermahlung des erstarrten Polymers.

16. Farbkonzentrat oder Druckfarbe, mit einem Sicherheitspigment nach einem der Ansprüche 1 bis 8.

17. Polymermasse mit einem Sicherheitspigment nach einem der Ansprüche 1 bis 8.

18. Wertdokument, Melierfaser, Sicherheitsfaden oder Sicherheitsfolie mit einem Sicherheitspigment nach einem der Ansprüche 1 bis 8.

## Claims

1. A security pigment of chemically stable core-shell particles, comprising a core based on a thermoplastic polymer, a shell based on a condensation polymer, and an organic or metalorganic feature substance present in dissolved or finely distributed form in the core, wherein the mass fraction of the shell amounts to more than 25% in relation to the mass of the core, in order to give the core-shell particles chemical stability, the condensation polymer is selected from melamine-formaldehyde resins (MF) and the feature substance is a fluorescent or phosphorescent or photochromic or thermochromic feature substance or a UV or IR or VIS absorption dye.

2. The security pigment according to claim 1, wherein the thermoplastic polymer is selected from polystyrene (PS), polyacrylates, polyethylene (PE), polypropylene (PP), polycarbonates (PC), polyamides (PA), polyurethanes (PU), polyureas (PH), polyethylene terephthalate (PET) or other polyesters, polyvinyl acetate (PVAC), polyvinyl chloride (PVC) or polyacrylonitrile (PAN).

3. The security pigment according to either one of claims 1 or 2, wherein the core-shell particle comprises exactly one core and a shell.

4. The security pigment according to any of claims 1 to 3, wherein the core-shell particle comprises several cores and a shell.

5. The security pigment according to any of claims 1 to 4, wherein the feature substance is present in dissolved form in the thermoplastic polymer.

6. The security pigment according to any of claims 1 to 5, wherein the fluorescent or phosphorescent feature substance is excitable in the UV spectral range and emits in the visible spectral range.

7. The security pigment according to any of claims 1 to 6, wherein the fluorescent or phosphorescent feature substance emits in the IR spectral range.

8. The security pigment according to any of claims 1 to 7, wherein two different luminescent dyes are present in finely distributed or dissolved form in the core, said dyes forming an energy transfer system in which the first luminescent dye after excitation transfers its excitation energy partially or completely to the second luminescent dye.

9. A method for producing a security pigment of core-shell particles according to any of claims 1 to 8, comprising a solid core based on a thermoplastic polymer, a shell based on a condensation polymer and an organic or metalorganic feature substance present in dissolved or finely distributed form in the core, having
a) the step of dissolving the feature substance together with the thermoplastic polymer in an organic solvent and dispersing the obtained solution in water by means of a surfactant;
b) supplying at a certain pH value the prepolymer units to be polymerized in a condensation reaction, in order to achieve the condensation of the shell-forming polymer around the dispersed droplets of the organic solvent;
c) removing the organic solvent in order to form the core-shell particles with a solid core.

10. The method according to claim 9, comprising d) reinforcing the shell of the core-shell particles by adding further prepolymer units to be polymerized,
wherein the mass fraction of the shell amounts to more than 25% in relation to the mass of the core.

11. A method for producing a security pigment of core-shell particles according to any of claims 1 to 8, comprising a solid core based on a thermoplastic polymer, a shell based on a condensation polymer and an organic or metalorganic feature substance present in dissolved or finely distributed form in the core, having
a) the step of preparing the core based on a thermoplastic polymer, in which the feature substance is present in dissolved or finely distributed form, wherein the thermoplastic polymer has functional groups on its outside, which are suitable for prepolymer units to bind thereto covalently for preparing the shell,
b) the step of preparing the shell from prepolymer units polymerizing in a condensation reaction, said units growing directly to the core through reaction with the functional groups of the thermoplastic core,
wherein the mass fraction of the shell amounts to more than 25% in relation to the mass of the core.

12. The method according to claim 11, wherein the functional groups are selected from amine groups, amide groups, isocyanate groups, aldehyde groups or hydroxyl groups.

13. The method according to claim 11 or 12, wherein the functional groups are present at the outer surface of the core based on the thermoplastic polymer at a concentration of 0.1 nmol/cm² to 10 nmol/cm².

14. A method for producing a security pigment of core-shell particles according to any of claims 1 to 8, comprising a solid core based on a thermoplastic polymer, a shell based on a condensation polymer and an organic or metalorganic feature substance present in dissolved or finely distributed form in the core, having
a) the step of dissolving an organic or metalorganic feature substance in a thermoplastic polymer to supply in this manner thermoplastic particles with feature substance dissolved therein; and
b) the step of incorporating the thermoplastic particles with feature substance dissolved therein obtained in step a) in a duromer matrix,
c) the step of grinding the product obtained in step b) to pigment particles,
wherein the mass fraction of the shell amounts to more than 25% in relation to the mass of the core.

15. The method according to claim 14, wherein the thermoplastic particles with feature substance dissolved therein supplied in step a) are produced as follows:
- dissolving the feature substance together with the thermoplastic polymer in an organic solvent and dispersing the obtained solution in water by means of a surfactant, followed by removing the organic solvent; or
- incorporating the feature substance in the thermoplastic polymer in the melt, followed by grinding the solidified polymer.

16. An ink concentrate or printing ink with a security pigment according to any of claims 1 to 8.

17. A polymer mass with a security pigment according to any of claims 1 to 8.

18. A value document, mottling fiber, security thread or security foil with a security pigment according to any of claims 1 to 8.

## Revendications

1. Pigment de sécurité en particules noyau-coque chimiquement stables, comprenant un noyau basé sur un polymère thermoplastique, une coque basée sur un polymère de condensation, et une substance caractéristique organique ou organométallique se trouvant dans le noyau sous forme dissoute ou finement divisée, cependant que la fraction massique de la coque s'élève à plus de 25 % relativement à la masse du noyau afin de conférer une stabilité chimique aux particules noyau-coque, le polymère de condensation est choisi parmi des résines mélamine-formaldéhyde (MF), et la substance caractéristique est une substance caractéristique fluorescente ou phosphorescente ou photochromique ou thermochromique, ou un colorant d'absorption UV ou IR ou VIS.

2. Pigment de sécurité selon la revendication 1, cependant que le polymère thermoplastique est choisi parmi polystyrène (PS), polyacrylates, polyéthylène (PE), polypropylène (PP), polycarbonates (PC), polyamides (PA), polyuréthanes (PU), polyurées (PH), polyéthylène-téréphtalate (PET), ou autres polyesters, acétate de polyvinyle (PVAC), chlorure de polyvinyle (PVC) ou polyacrylonitrile (PAN).

3. Pigment de sécurité selon une des revendications 1 ou 2, cependant que la particule noyau-coque comprend exactement un noyau et une coque.

4. Pigment de sécurité selon une des revendications de 1 à 3, cependant que la particule noyau-coque comprend plusieurs noyaux et une coque.

5. Pigment de sécurité selon une des revendications de 1 à 4, cependant que la substance caractéristique se trouve sous forme dissoute dans le polymère thermoplastique.

6. Pigment de sécurité selon une des revendications de 1 à 5, cependant que la substance caractéristique fluorescente ou phosphorescente est excitable dans la plage spectrale UV et émet dans la plage spectrale visible.

7. Pigment de sécurité selon une des revendications de 1 à 6, cependant que la substance caractéristique fluorescente ou phosphorescente émet dans la plage spectrale IR.

8. Pigment de sécurité selon une des revendications de 1 à 7, cependant que, dans le noyau, deux colorants luminescents différents se trouvent sous forme finement divisée ou dissoute, lesquels constituent un système de transfert d'énergie dans lequel le premier colorant luminescent transfère après excitation son énergie d'excitation partiellement ou entièrement au deuxième colorant luminescent.

9. Procédé de fabrication d'un pigment de sécurité en particules noyau-coque selon une des revendications de 1 à 8, comprenant un noyau solide basé sur un polymère thermoplastique, une coque basée sur un polymère de condensation, et une substance caractéristique organique ou organométallique se trouvant dans le noyau sous forme dissoute ou finement divisée, comportant
a) l'étape de la dissolution de la substance caractéristique conjointement avec le polymère thermoplastique dans un solvant organique, et la dispersion de la solution obtenue dans l'eau au moyen d'un tensioactif ;
b) la mise à disposition, à un PH déterminé, des unités de prépolymère à polymériser dans une réaction de condensation, afin d'obtenir la condensation du polymère constituant la coque autour des gouttelettes dispersées du solvant organique ;
c) l'enlèvement du solvant organique afin de constituer les particules noyau-coque à noyau solide.

10. Procédé selon la revendication 9, comprenant d) le renforcement de la coque des particules noyau-coque par ajout d'autres unités de prépolymère à polymériser, cependant que la fraction massique de la coque s'élève à plus de 25 % relativement à la masse du noyau.

11. Procédé de fabrication d'un pigment de sécurité en particules noyau-coque selon une des revendications de 1 à 8, comprenant un noyau solide basé sur un polymère thermoplastique, une coque basée sur un polymère de condensation, et une substance caractéristique organique ou organométallique se trouvant dans le noyau sous forme dissoute ou finement divisée, comportant
a) l'étape de la génération du noyau basé sur un polymère thermoplastique dans lequel la substance caractéristique se trouve sous forme dissoute ou finement divisée, cependant que le polymère thermoplastique comporte à sa face extérieure des groupes fonctionnels adaptés à ce que des unités de prépolymère puissent s'y lier de manière covalente pour la génération de la coque ;
b) l'étape de la génération de la coque à partir d'une réaction de condensation d'unités de prépolymère polymérisantes qui, par réaction avec les groupes fonctionnels du noyau thermoplastique, s'agglutinent directement au noyau,
cependant que la fraction massique de la coque s'élève à plus de 25 % relativement à la masse du noyau.

12. Procédé selon la revendication 11, cependant que les groupes fonctionnels sont choisis parmi groupes amine, groupes amide, groupes isocyanate, groupes aldéhide ou groupes hydroxyle.

13. Procédé selon la revendication 11 ou 12, cependant que les groupes fonctionnels se trouvent en une concentration comprise entre 0,1 nmol/cm² et 10 nmol/cm² à la surface extérieure du noyau basé sur le polymère thermoplastique.

14. Procédé de fabrication d'un pigment de sécurité en particules noyau-coque selon une des revendications de 1 à 8, comprenant un noyau solide basé sur un polymère thermoplastique, une coque basée sur un polymère de condensation, et une substance caractéristique organique ou organométallique se trouvant dans le noyau sous forme dissoute ou finement divisée, comportant
a) l'étape de la dissolution d'une substance caractéristique organique ou organométallique dans un polymère thermoplastique afin de, de cette façon, mettre à disposition des particules thermoplastiques renfermant de la substance caractéristique étant diluée en elles ; et
b) l'étape de l'insertion des particules thermoplastiques obtenues à l'étape a), renfermant de la substance caractéristique diluée en elles, dans une matrice duromère
c) l'étape du broyage du produit obtenu à l'étape b) pour engendrer des particules de pigment,
cependant que la fraction massique de la coque s'élève à plus de 25 % relativement à la masse du noyau.

15. Procédé selon la revendication 14, cependant que les particules thermoplastiques mises à disposition à l'étape a), renfermant de la substance caractéristique diluée en elles, sont fabriquées comme suit :
- dissolution de la substance caractéristique conjointement avec le polymère thermoplastique dans un solvant organique, et dispersion de la solution obtenue dans l'eau au moyen d'un tensioactif, puis ensuite enlèvement du solvant organique ; ou
- insertion de la substance caractéristique dans le polymère thermoplastique dans la masse fondue, suivie du broyage du polymère solidifié.

16. Colorant concentré ou encre d'impression ayant un pigment de sécurité selon une des revendications de 1 à 8.

17. Masse polymère ayant un pigment de sécurité selon une des revendications de 1 à 8.

18. Document de valeur, fibre chinée, fil de sécurité ou film de sécurité ayant un pigment de sécurité selon une des revendications de 1 à 8.
